# EUROPEAN PATENT SPECIFICATION

(11) **EP 1 808 354 B1**
(45) Date of publication and mention of the grant of the patent: **05.08.2009**
(21) Application number: 06125292.0
(22) Date of filing: 04.12.2006
(51) Int. Cl.: B62B 7/14, A47D 13/02

(54) **Combination of an adapter, an infant pushchair and an infant article**
Kombination aus einem Adapter, einem Kinderwagen und einer Tragetasche
Combinaison d'un adaptateur, d'une poussette d'enfant et d'un couffin

(30) Priority: 12.01.2006 ES 200600067
(43) Date of publication of application: 18.07.2007
(73) Proprietor: PLAY, S.A., 08184 Palau de Plegamans (ES)
(72) Inventor: Jane Stopp, Joaquin, 08184 Palau de Plegamans (ES)
(74) Representative: Ponti Sales, Adelaida

(56) References cited:
- EP-A- 1 574 389
- WO-A-03/101804
- DE-U1-1202005 008 21
- FR-A- 2 756 244
- US-A1- 2004 164 593
- US-A1- 2005 225 157

## Description

The present invention refers to a combination of an adapter, an infant pushchair and an infant article, of the kind used to place an infant article, such as a carrycot or the like, on an infant pushchair.

### BACKGROUND OF THE INVENTION

It is known to use adapters to place a carrycot or the like in an infant pushchair. Usually these adapters can be mounted and detached on the structure of the pushchair.

One kind of these known adapters comprises a housing complementary to the lower ends of the handle of the carrycot. When these ends of the handle are placed inside the adapters, the carrycot is not locked to the pushchair, but it is necessary to rotate the handle to a preset position.

This requirement of an additional action to lock the carrycot is a drawback, because it is possible the carrycot to be inadvertently, which is a danger of the child inside the carrycot.

US 2004/0164593 A1 discloses a device for removably fitting carrycot seats and carrycots to baby carriages. Its anchoring mechanism has a catch being apt to engagedly seize a transverse pin being fixedly arranged in the inside of a box being apted to be attached to the sides of the chassis of the pushchair.

EP-A-1 574 389 discloses a combination of an adapter, an infant pushchair and an infant article according to the preamble of claim 1, i.e a locking mechanism of a child car seat that includes a locking member which is capable of being engaged with a pin disposed in a armrest of a stroller body and disengaged therefrom, a stopper which is rotated together with the locking member, and a

### DESCRIPTION OF THE INVENTION

With the combination said drawbacks are solved, presenting other advantages that will be described.

Preferably, said locking body comprises a spring which moves the locking body to the unlocking position when the lower end of the driving body is not housed in any of said cavities.

Advantageously, said knob is housed inside a groove, being possible to access said knob to unlock the anchoring element.

Said driving body can also comprise a signalling groove which shows the position of said driving body, so that it can be seen at first sight if the anchoring element is in its locking or unlocking position.

Advantageously, the width of the upper part of the anchoring element and the width of the support element are narrower than the width of their upper part.

### BRIEF DESCRIPTION OF THE DRAWINGS

For a better understanding of what has been disclosed, some drawings are attached in which, diagrammatically and only as a non-limitative example, a practical case of embodiment is shown.
Fig. 1 is a perspective view of the anchorage and support which form the adapter of the present invention separated from each other;
Fig. 2-5 are frontal cross-sectional elevation views of the process of insertion and locking of the anchorage inside the support; and
Fig. 6 and 7 are frontal cross-sectional elevation views of the unlocking process of the anchorage.

### DESCRIPTION OF A PREFERRED EMBODIMENT

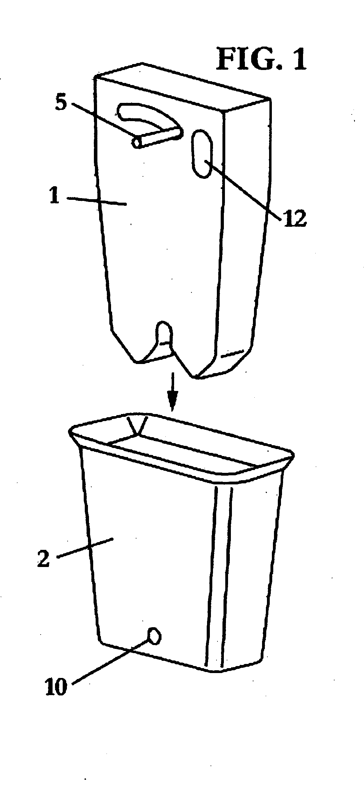

As can be seen from Fig. 1, the adapter of the present invention comprises an anchoring element 1 integral with an infant article, such as carrycot, and a support element 2 integral with an infant pushchair.

Frontally seen, the anchoring element 1 and the support element 2 present a conical profile, i.e., their width at the lower part is narrower than their upper part. This conicity facilitates the insertion of the anchoring element 1 inside the support element 2.

As it is apparent, the adapters of the present invention are used in pairs, i.e., there will be a support element 2 at each side of the infant pushchair and, likewise, there will be an anchoring element 1 at each side of the infant article.

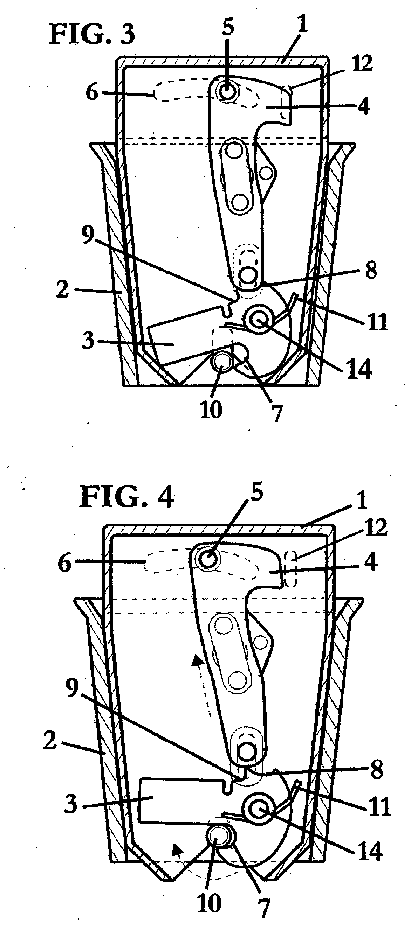

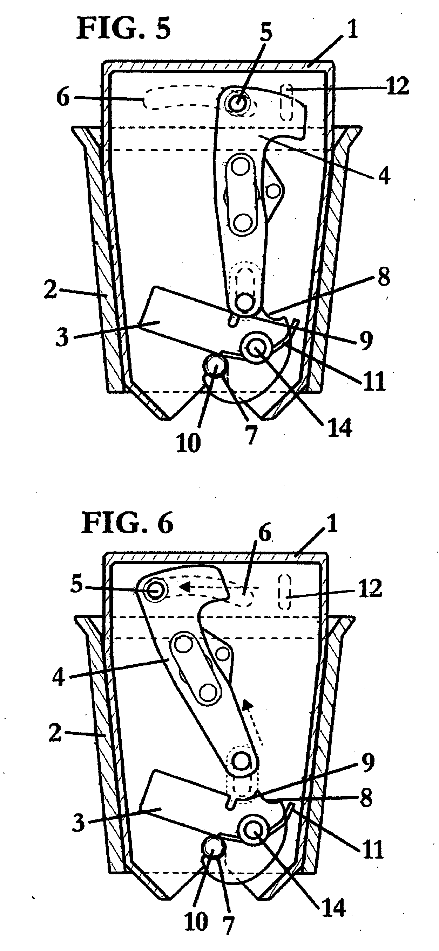

The anchoring element 1 comprises inside it a locking body 3 movable from two positions: a locking position (Fig. 5), in which the anchoring element 1 remains locked inside the support element 2, and an unlocking position (Fig. 3), in which the anchoring element 1 can be detached from the support element 2.

Said locking body 3 is linked to a driving body 4 provided with a knob 5 movable along a curved groove 6.

The locking body 3 comprises a hook 7 which, at the locking position, engages with a pin 10 integral with the support element 2, and first and second cavities 8, 9, where is housed the lower end of said driving body, as will the described bellow.

The locking body 3 also comprises a spring 11 which promotes its movement to the unlocking position when the lower end of the driving body 4 is not housed in anyone of said cavities 8, 9.

The driving body also comprises a signalling groove 12, which indicates the position of the locking body 3.

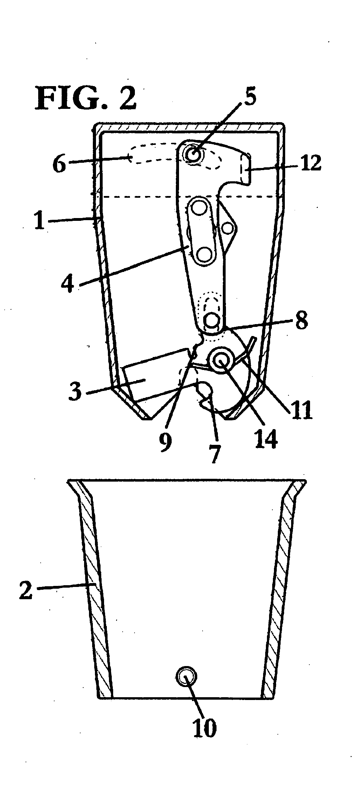

The operation of the adapter of the present invention is the following: When the anchoring element 1 is separated from the support element 2, the locking body 3 is at its unlocking position, the lower end of the driving body 4 is housed in the first cavity 8 (Fig. 2).

When the anchoring element 1 is inserted inside the support element 2, there is a moment in which the locking element 3 contacts the pin 10 provided inside the support element 2 (Fig. 3).

When this contact is established between the locking body 3 and the pin 10, and because of the pressure exerted by the person who places the anchoring element 1 inside the support element 2, the lower end of the driving body 4 passes from the first cavity 8 to the second cavity 9 and said locking body 3 rotates about a rotation axis 14 (Fig. 4), until the hook 7 engages with the pin 10 (Fig. 5). In this position, the anchoring element 1 remains locked inside the support element 2.

As it can be seen, simply placing the anchoring element 1 inside the support element 2, it is locked in position. I.e., the locking is possible with single movement, which is not possible in the adapters already known, where two movements are necessary, a first insertion movement and a second locking movement.

As it can be seen in Fig. 5, in the locking position the knob 5 is placed at one of the ends of the curved groove 6.

To unlock the anchoring element 1 it is necessary to drive the knob 5, placing it at the other end of the curved groove 6.

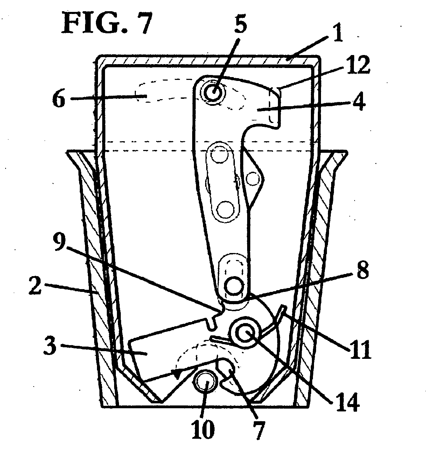

When the knob 5 is placed in this position, the driving body 4 moves, whose lower end leaves the second cavity 9 (Fig. 6). In this position there is no pressure against the driving body 4, and thanks to the action of the spring 11, the locking body 3 rotates in the sense opposed to the previous rotation, so that the lower end of the driving body 4 houses again inside the first cavity 8 (Fig. 7).

In this unlocking position it is possible to withdraw the anchoring element 1 from inside the support element 2.

Even though reference is made to an embodiment of the invention, it is apparent for a person skilled in the art that the disclosed adapter is susceptible of numerous variations and modifications embodied by the scope of protection defined by the attached claims.

## Claims

1. Combination of an adapter, an infant pushchair, and an infant article, to permit the placement of an infant article on an infant pushchair, the adapter comprising a support element (2) integral with the infant pushchair and an anchoring element (1) integral with the infant article, the anchoring element (1) comprising a locking body (3) movable between a locking position and an unlocking position, so that when the anchoring element (1) is inserted inside the support element (2), said locking body (3) stays automatically in its locking position engaged with a pin (10) provided in said support element (2), said locking body (3) comprising a hook (7) that, in the locking position, is engaged with said pin (10),.
said anchoring element (1) also comprising a driving body (4) linked to said locking body (3), said driving body (4) being movable between a locking position and an unlocking position, and.
said driving body (4) comprising a knob (5) to promote the movement of said driving body (4) from said locking position to said unlocking position,.
**characterised in that** said locking body (3) comprises two cavities (8, 9) ) inside which is housed the lower end of said driving body (4), a first cavity (8) inside which it houses in the unlocking position and a second cavity (9) inside which it houses in the locking position.

2. Combination according to claim 1, **characterised in that** said locking body (3) comprises a spring (11) that moves it to the unlocking position when the lower end of the driving body (4) is not housed in none of said cavities (8, 9).

3. Combination according to claim 1, **characterised in that** said knob (5) is housed inside a groove (6).

4. Combination according to claim 1, **characterised in that** said driving body (4) comprises a signalling groove (12) that indicates the position of said driving body (4).

5. Combination according to claim 1, **characterised in that** the width of the lower part of the anchoring element (1) and the width of the support element (2) are narrower than the width of their upper part.

## Patentansprüche

1. Kombination aus einem Adapter, einem Kinderwagen und einem Kindergegenstand, um die Platzierung eines Kindergegenstands auf einem Kinderwagen zuzulassen, wobei der Adapter ein Trägerelement (2), welches mit dem Kinderwagen integral ist, und ein Verankerungselement (1) aufweist, welches mit dem Kindergegenstand integral ist, wobei das Verankerungselement (1) einen Arretierkörper (3) aufweist, welcher zwischen einer Arretierposition und einer Entarretierposition derart beweglich ist, dass der Arretierkörper (3), wenn das Verankerungselement (1) in das Trägerelement (2) eingeführt ist, automatisch in der Arretierposition desselben bleibt, in welcher derselbe mit einem im Trägerelement (2) vorgesehenen Stift (10) in Eingriff steht, wobei der Arretierkörper (3) einen Haken (7) aufweist, welcher in der Arretierposition mit dem Stift (10) in Eingriff steht, wobei das Verankerungselement (1) auch einen Antriebskörper (4) aufweist, welcher mit dem Arretierkörper (3) verbunden ist, wobei der Antriebskörper (4) zwischen einer Arretierposition und einer Entarretierposition beweglich ist, und wobei der Antriebskörper (4) einen Knopf (5) zum Unterstützen bzw. Vorantreiben der Bewegung des Antriebskörpers (4) von der Arretierposition in die Entarretierposition aufweist,
**dadurch gekennzeichnet, dass**
der Arretierkörper (3) zwei Hohlräume (8, 9) aufweist, in welchen das untere Ende des Antriebskörpers (4) untergebracht ist, wobei dasselbe in der Entarretierposition in einem ersten Hohlraum (8) und in der Arretierposition in einem zweiten Hohlraum (9) untergebracht ist.

2. Kombination nach Anspruch 1,
**dadurch gekennzeichnet, dass**
der Arretierkörper (3) eine Feder (11) aufweist, welche denselben in die Entarretierposition bewegt, wenn das untere Ende des Antriebskörpers (4) in keinem der Hohlräume (8, 9) untergebracht ist.

3. Kombination nach Anspruch 1,
**dadurch gekennzeichnet, dass**
der Knopf (5) in einer Nut (6) untergebracht ist.

4. Kombination nach Anspruch 1,
**dadurch gekennzeichnet, dass**
der Antriebskörper (4)eine Signalnut (12) aufweist, welche die Position des Antriebskörpers (4) angibt.

5. Kombination nach Anspruch 1,
**dadurch gekennzeichnet, dass**
die Breite des unteren Teils des Verankerungselements (1) und die Breite des Trägerelements (2) schmaler als die Breite des oberen Teils derselben sind.

## Revendications

1. Combinaison d'un adaptateur, d'une poussette d'enfant et d'un couffin, pour permettre le placement d'un couffin sur une poussette d'enfant, l'adaptateur comprenant un élément de support (2) d'un seul tenant avec la poussette d'enfant et un élément d'ancrage (1) d'un seul tenant avec le couffin, l'élément d'ancrage (1) comprenant un corps de verrouillage (3) déplaçable entre une position de verrouillage et une position de déverrouillage, de sorte que lorsque l'élément d'ancrage (1) est inséré à l'intérieur de l'élément de support (2), ledit corps de verrouillage (3) repose automatiquement dans sa position de verrouillage mis en prise avec une broche (10) prévue dans ledit élément de support (2), ledit corps de verrouillage (3) comprenant un crochet (7) qui, dans la position de verrouillage, est mis en prise avec ladite broche (10), ledit élément d'ancrage (1) comprenant en outre un corps d'entraînement (4) relié audit corps de verrouillage (3), ledit corps d'entraînement (4) étant déplaçable entre une position de verrouillage et une position de déverrouillage, et ledit corps d'entraînement (4) comprenant un bouton (5) pour favoriser le mouvement dudit corps d'entraînement (4) de ladite position de verrouillage à ladite position de déverrouillage, **caractérisée en ce que** ledit corps de verrouillage (3) comprend deux cavités (8, 9) à l'intérieur desquelles est logée l'extrémité inférieure dudit corps d'entraînement (4), une première cavité (8) à l'intérieur de laquelle elle loge dans la position de déverrouillage et une deuxième cavité (9) à l'intérieur de laquelle elle loge dans la position de verrouillage.

2. Combinaison selon la revendication 1, **caractérisée en ce que** ledit corps de verrouillage (3) comprend un ressort (11) qui le déplace jusqu'à la position de déverrouillage lorsque l'extrémité inférieure du corps d'entraînement (4) n'est logée dans aucune desdites cavités (8, 9).

3. Combinaison selon la revendication 1, **caractérisée en ce que** ledit bouton (5) est logé à l'intérieur d'une rainure (6).

4. Combinaison selon la revendication 1, **caractérisée en ce que** ledit corps d'entraînement (4) comprend une rainure de signalisation (12) qui indique la position dudit corps d'entraînement (4).

5. Combinaison selon la revendication 1, **caractérisée en ce que** la largeur de la partie inférieure de l'élément d'ancrage (1) et la largeur de l'élément de support (2) sont plus étroites que la largeur de leur partie supérieure.
